# EUROPÄISCHE PATENTSCHRIFT

(11) **EP 0 651 151 B1**
(45) Veröffentlichungstag und Bekanntmachung des Hinweises auf die Patenterteilung: **16.09.1998**
(21) Anmeldenummer: 94810079.7
(22) Anmeldetag: 11.02.1994
(51) Int. Cl.: F02F 1/24, F02B 23/02

(54) **Hubkolbenbrennkraftmaschine der Dieselbauart**
Internal combustion Diesel engine
Moteur à combustion interne du type Diesel

(30) Priorität: 29.10.1993 EP 93810756
(43) Veröffentlichungstag der Anmeldung: 03.05.1995
(73) Patentinhaber: Wärtsilä NSD Schweiz AG, 8401 Winterthur (CH)
(72) Erfinder: Schütz, Mathias, CH-8037 Zürich (CH)
(74) Vertreter: Hammer, Bruno, Dr.

(56) Entgegenhaltungen:
- DE-C- 288 507
- DE-C- 397 837
- NL-C- 72 509
- NL-C- 82 310

## Beschreibung

Die Erfindung bezieht sich auf eine Hubkolbenbrennkraftmaschine der Dieselbauart gemäß Oberbegriff des Anspruchs 1 (siehe DE-A-397 837).

Bei Brennkraftmaschinen dieser Art, bei denen es sich um Grossmotoren handelt, da mindestens zwei Brennstoffeinspritzventile pro Zylinder vorhanden sind, sind die Brennstoffventile in einer gemeinsamen Ebene angeordnet, die quer zur Zylinderachse liegt. Die in den Brennstoffventilen angebrachten Düsenlöcher sind so gebohrt, dass die aus ihnen austretenden Brennstoffstrahlen in dem scheibenförmigen Brennraum eine möglichst gute Vermischung mit der komprimierten Verbrennungsluft ergeben. Bei Brennkraftmaschinen mit einem - in Richtung der Zylinderachse gesehen - langen Brennraum ist es jedoch schwierig, eine homogene Vermischung zu erreichen, da diejenige Verbrennungsluft, die sich in den beiden axial äussersten Bereichen des Brennraums befindet, nur schlecht von den Brennstoffstrahlen erreicht wird. Ferner ist in einem Brennraum, in dem eine drallbehaftete Strömung der Verbrennungsluft herrscht, die Ausbreitung der Brennstoffstrahlen in Richtung der Zylinderachse wegen der Ablenkung durch die Drallbewegung der Luft wesentlich erschwert. Es kommt dabei zu hohen Brennstoffkonzentrationen im Zentrum des Brennraums und somit zu schlechter Gemischbildung. Dadurch verzögert sich der Verbrennungsvorgang, wodurch der thermische Wirkungsgrad und damit der Brennstoffverbrauch verschlechtert wird. Werden die Achsen der Düsenlöcher so geändert, dass sie unter einem grösseren Winkel zu der Ebene verlaufen, in der die Brennstoffeinspritzventile angeordnet sind, so besteht die Gefahr, insbesondere bei Teillast, dass die den Brennraum begrenzende Kolbenstirnfläche sowie die Lauffläche des Kolbens oder im Zylinderdeckel angeordnete Auslass- und Einlassventile von der Flamme erfasst werden und es zu Abbrand oder Oelkoksablagerungen kommt. Dadurch können in vermehrtem Masse Korrosionen und/oder Verschleiss auftreten.

Der Erfindung liegt die Aufgabe zugrunde, eine Hubkolbenbrennkraftmaschine der eingangs genannten Art dahingehend zu verbessern, dass auch dann eine möglichst homogene Gemischbildung und ein verschleissarmer Betrieb bei Teillast ermöglicht wird, wenn die axiale Abmessung des Brennraums gross ist.

Diese Aufgabe wird erfindungsgemäss durch das kennzeichen des Anspruchs 1 gelöst. Hierdurch wird es möglich, auch bei in axialer Richtung grossen Brennräumen eine gute Vermischung des in zwei Etagen eingespritzen Brennstoffs mit der komprimierten Verbrennungsluft zu erreichen, und zwar auch bei Teillast der Maschine. Durch die neue Anordnung wird vermieden, dass die Achsen der Düsenlöcher zu stark gegen die Kolbenstirnfläche und die Kolbenlauffläche und gegebenenfalls die im Zylinderdeckel angeordneten Auslass- und Einlassventile gerichtet werden müssen. Dadurch werden Abbrand und Oelkoksansätze am Kolben und/oder am Zylinder und gegebenenfalls an den Ventilen bei Teillast vermieden. Ausserdem wird ein homogenes Gemisch aus komprimierter Verbrennungsluft und eingespritztem Brennstoff und damit eine ungestörte Verbrennung erreicht. Die Erfindung ist sowohl auf grosse Brennkraftmaschinen anwendbar, die nach dem Zweitakt-Verfahren arbeiten, als auch für solche grossen Maschinen, die nach dem Viertakt-Verfahren arbeiten.

Zwei Ausführungsbeispiele der Erfindung sind in der folgenden Beschreibung anhand der Zeichnung näher erläutert. Es zeigen jeweils schematisch:
- Fig.1: einen Axialschnitt durch das obere Ende eines Zylinders mit Zylinderdeckel einer Hubkolbenbrennkraftmaschine,
- Fig.2: eine Ansicht des Zylinderdeckels in Fig.1, vom Zylinder her gesehen,
- Fig.3: einen Axialschnitt eines Teils des oberen Zylinderendes und des Zylinderdeckels mit gegenüber Fig.1 abgewandelter Form des Brennraumes,
- Fig.3a und 3b: zwei verschiedene Betriebsstellungen eines Umschaltorgans in einer Brennstoffzufuhrleitung und
- Fig.4: eine Ansicht des Zylindedrdeckels in Fig.3 vom Zylinder her gesehen, in kleinerem Massstab als in Fig.3.

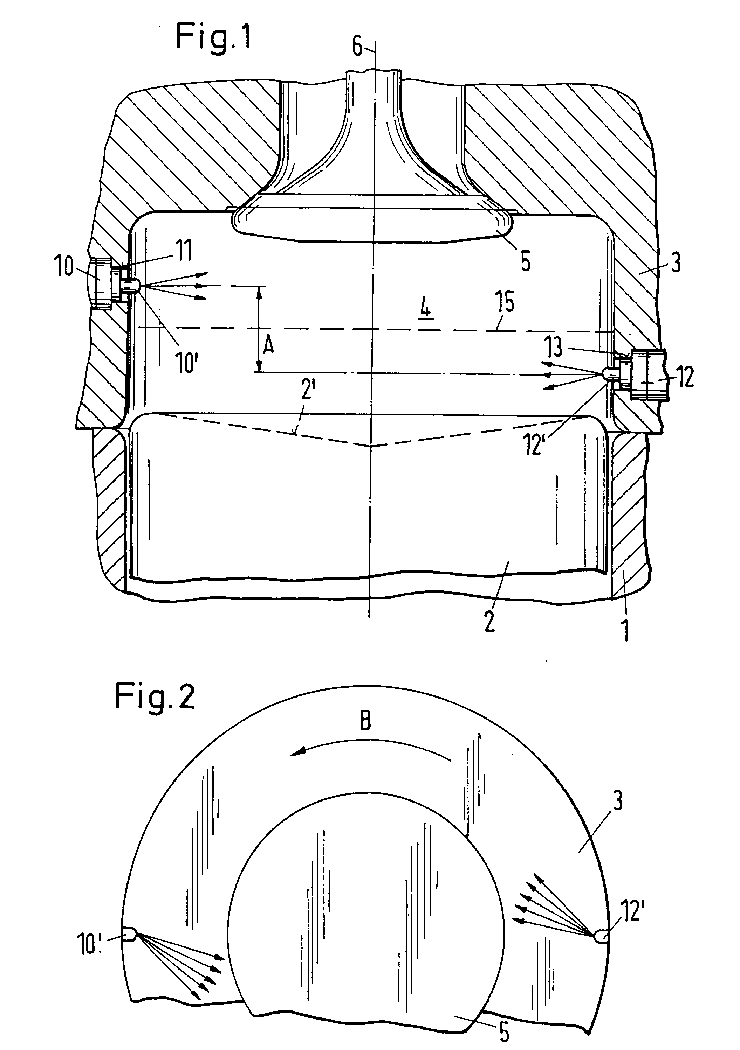

Gemäss Fig.1 ist in einem Zylindereinsatz 1 einer nicht näher dargestellten Zweitakt-Dieselbrennkraftmaschine ein Kolben 2 angeordnet, der in Fig.1 in seinem oberen Totpunkt dargestellt ist und der im Zylindereinsatz 1 aufund abbewegbar geführt ist. Zu diesem Zweck ist der Kolben 2 in bekannter Weise über eine Kolbenstange mit einem Kreuzkopf verbunden, an dem eine Pleuelstange angelenkt ist, die von der Kurbelwelle angetrieben wird. Der Zylindereinsatz 1 wird von einem Zylinderdeckel 3 überspannt, der zusammen mit dem Kolben 2 einen im wesentlichen zylindrischen, scheibenförmigen Brennraum 4 begrenzt. Die Verbrennungsluft tritt über nicht dargestellte, im Bereich des unteren Totpunktes des Kolbens im Zylindereinsatz 1 angeordnete Schlitze in diesen mit einer Drallbewegung ein, die während des Kompressionshubes des Kolbens erhalten bleibt; sie ist in Fig.2 mit dem Pfeil B angedeutet. Im Zentrum des Zylinderdeckels 3 ist ein Auslassventil 5 angeordnet, über das in geöffnetem Zustand während des ersten Teils des Kompressionshubes das Abgas aus dem Brennraum 4 zu einem Auspuffsammelrohr strömt. Die Brennkraftmaschine arbeitet also mit Längsspülung. Mit 6 ist die gemeinsame Achse des Zylindereinsatzes 1 und des Kolbens 2 bezeichnet, der in seiner dem Brennraum zugewendeten Stirnfläche eine muldenförmige Vertiefung 2' aufweist.

Im zylindrischen Abschnitt des den Brennraum 4 begrenzenden Zylinderdeckls 3 sind zwei Brennstoffeinspritzventile 10 und 12 angeordnet, die je mit einem Düsenkopf 10' bzw. 12' in eine zum Brennraum hin offene Bohrung 11 bzw. 13 des Zylinderdeckels ragen. In Richtung der Achse 6 gesehen, sind die Einspritzventile 10 und 12 um den Abstand A zueinander versetzt angeordnet.

Ausserdem sind sie in Umfangsrichtung des Brennraums 4 um 180° zueinander versetzt. Der Düsenkopf 10' ist mit fünf Düsenlöchern versehen, die so gebohrt sind, dass die aus ihnen austretenden Brennstoffstrahlen sich nur in der in Fig.1 oberen Hälfte des Brennraums 4 ausbreiten. In entsprechender Weise ist der Düsenkopf 12' mit fünf Düsenlöchern versehen, die so gebohrt sind, dass die aus ihnen austretenden Brennstoffstrahlen sich in der in Fig.1 unteren Hälfte des Brennraums 4 ausbreiten. Auf diese Weise ist jedem der beiden Brennstoffventile 10 und 12 eine scheibenförmige, sich quer zur Achse 6 erstreckende Zone des Brennraums 4 zugeordnet; der Brennraum 4 ist also quasi in zwei übereinander angeordnete Zonen unterteilt, wie dies durch die gestrichelte Linie 15 in Fig.1 angedeutet ist.

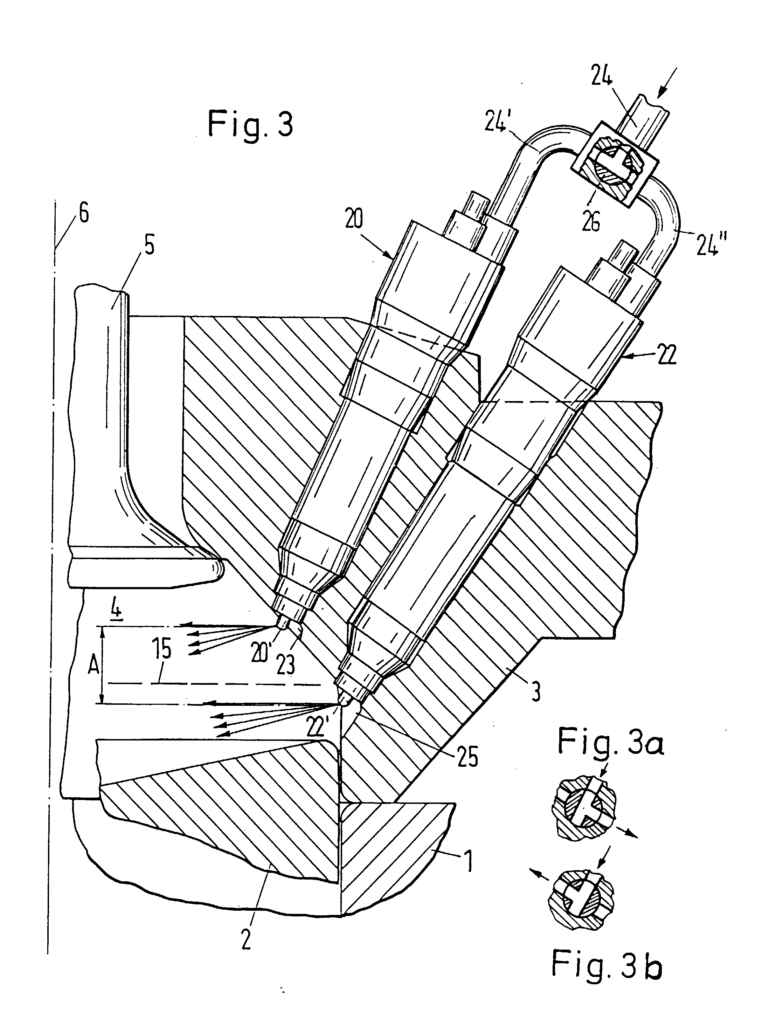

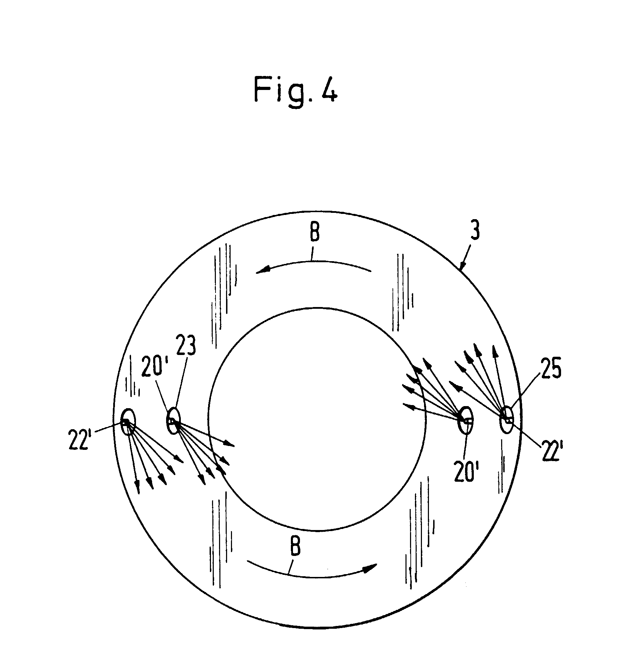

Beim Ausführungsbeispiel gemäss Fig.3 und 4 ist der Brennraum 4 im Zylinderdeckel 3 von einer Fläche begrenzt, die im in Fig.3 unteren Abschnitt ebenfalls zylindrisch ist und den gleichen Durchmesser aufweist wie der Zylindereinsatz 1. An den zylindrischen Abschnitt schliesst sich nach oben ein kegelförmiger Abschnitt an, der sich zum Auslassventil 5 hin verjüngt. Der Zylinderdeckel 3 ist mit insgesamt vier Brennstoffeinspritzventilen 20 und 22 versehen, von denen in Fig.3 nur zwei in einer gemeinsamen Radialebene angeordnete Ventile zu sehen sind. Die Anordnung der beiden anderen Brennstoffeinspritzventile ist aus Fig.4 ersichtlich. Die Düsenköpfe 20' und 22' ragen in Oeffnungen 23 bzw. 25 im kegeligen bzw. zylindrischen Abschnitt des Zylinderdeckels. Die in einer Radialebene angeordneten Brennstoffeinspritzventile haben wiederum zwischen sich den Abstand A, der 26% des Bohrungsdurchmessers des Zylindereinsatzes 1 oder 6,5% des Kolbenhubes beträgt. Die mit jeweils fünf Düsenlöchern versehenen Düsenköpfe sind wiederum so gebohrt, dass die aus ihnen austretenden Brennstoffstrahlen der oberen bzw. unteren Zone des Brennraums 4 zugeordnet sind. Dabei können die Düsenlöcher des Einspritzventils 22 einen grösseren Querschnitt aufweisen als die Düsenlöcher des Einspritzventils 20. Wie Fig.3 weiter erkennen lässt, sind jeweils zwei in einer Radialebene angeordnete Brennstoffeinspritzventile an eine gemeinsame Brennstoffzufuhrleitung 24 angeschlossen, indem sich diese Leitung in zwei Äste 24' und 24'' gabelt, von denen der Ast 24' zum Einspritzventil 20 und der Ast 24'' zum Einspritzventil 22 führt. An der Gabelstelle der Leitung 24 ist ein Umschaltorgan 26 mit einer T-Bohrung angeordnet, das in drei verschiedene Betriebsstellungen verschwenkt werden kann. In gleicher Weise sind auch die beiden in Fig.4 links der Achse 6 angeordneten Einspritzventile an eine gemeinsame Brennstoffzufuhrleitung mit Umschaltorgan angeschlossen. Die nachfolgend beschriebenen Betriebsstellungen gelten deshalb auch für die beiden anderen Einspritzventile.

In der in Fig.3 gezeigten Betriebsstellung des Umschaltorgans 26 fliesst Brennstoff in beide Äste 24' und 24'', so dass beide Einspritzventile 20, 22 in Funktion sind und die Brennkraftmaschine im Vollastbetrieb arbeitet. Bei Teillastbetrieb der Brennkraftmaschine wird die Brennstoffzufuhr zu den Einspritzventilen 20 und 22 mit Hilfe des Umschaltorgans 26 wahlweise abgesperrt, wodurch der jeweilige Düsenaustrittsquerschnitt für den Brennstoff gegenüber dem Vollastbetrieb verkleinert wird. Da die zugeführte Brennstoffmenge gleich bleibt, ergibt sich bei Teillastbetrieb ein höherer Einspritzdruck und eine längere Einspritzdauer. In der in Fig.3a gezeigten Betriebsstellung wird nur der Ast 24'' mit Brennstoff beaufschlagt, und es steht somit nur das Einspritzventil 22 in Funktion. Gemäss Fig.3a arbeitet die Brennkraftmaschine in hohem Teillastbetrieb bei abgesperrtem Einspritzventil 20, wobei der Brennstoffdruck vor dem Einspritzventil 22 etwas grösser ist als bei Vollastbetrieb. In der in Fig.3b gezeigten Betriebsstellung des Umschaltorgans 26 ist die Brennstoffzufuhr zum Einspritzventil 22 abgesperrt und der Brennstoff gelangt von der Leitung 24 über den Ast 24' nur zum Einspritzventil 20. Wegen des kleineren Querschnitts der Düsenlöcher wird der Brennstoffdruck vor diesem Einspritzventil nochmals erhöht. Ausserdem verlängert sich auch die Einspritzdauer. Die Brennkraftmaschine ist in niedrigem Teillastbetrieb. Da die drei beschriebenen Betätigungen des Umschaltorgans 26 gleichzeitig auch am Umschaltorgan der beiden anderen Einspritzventile stattfinden, bleiben bei allen drei Betriebslasten die Verbrennungsvorgänge im Brennraum 4 symmetrisch. Die beiden Umschaltorgane können aber auch verschieden geschaltet werden, so dass sich Einspritzverhältnisse ergeben, die ähnlich sind wie bei der Anordnung gemäss Fig.1, wenn dort zwei Einspritzventile in jeder scheibenförmigen Zone angeordnet werden.

Abweichend von dem beschriebenen Ausführungsbeispiel gemäss Fig.1 und 2 ist es bei diesem auch möglich, je Zone zwei oder mehr Einspritzventile über den Umfang des Brennraums 4, vorzugsweise gleichmässig, verteilt anzuordnen. Dabei können - in Richtung der Achse 6 gesehen - die übereinanderliegenden Brennstoffventile beider Zonen in der gleichen Radialebene liegen - ähnlich wie beim Ausführungsbeispiel gemäss Fig.3 - oder sie liegen in Umfangsrichtung des Brennraums zueinander versetzt. Weiter ist es möglich, auch mehr als zwei Brennstoffventile in axialer Richtung hintereinander anzuordnen, so dass sich drei oder vier übereinanderliegende Zonen ergeben. Anstelle des in Fig.3 dargestellten Umschaltorgans 26 könnte auch in jedem Ast der Zufuhrleitung 24 ein Auf-/Zu-Ventil angeordnet sein.

Abweichend von den beschriebenen Ausführungsbeispielen ist es auch möglich, die Erfindung bei Brennkraftmaschinen der Tauchkolbenbauart anzuwenden. Besonders interessant wird die Erfindung bei Brennkraftmaschinen, deren Verhältnis von Kolbenhub zu Bohrungsdurchmesser des Zylinders grösser als 3,0 ist. In axialer Richtung gesehen sollte der Winkel zwischen dem obersten Brennstoffstrahl und dem untersten Brennstoffstrahl ein und desselben Brennstoffventils nicht grösser als 30° sein.

## Patentansprüche

1. Hubkolbenbrennkraftmaschine der Dieselbauart, mit mindestens einem einen Kolben (2) aufweisenden Zylinder, mit einem den Zylinder überspannenden Zylinderdeckel (3), der zusammen mit dem Kolben (2) einen Brennraum (4) begrenzt, und mit mehreren Brennstoffventilen (20,22), die je mindestens ein Düsenloch aufweisen, über das Brennstoff taktweise in eine dem jeweiligen Brennstoffventil (20,22) zugeordnete Zone des Brennraums (4) eingespritzt wird, in welcher Zone sich der aus dem Düsenloch austretende Brennstoffstrahl ausbreitet, wobei die Brennstoffventile (20,22) - in Richtung der Zylinderachse (6) gesehen - an mindestens zwei unterschiedlichen axialen Positionen angeordnet sind, dadurch gekennzeichnet, dass die den Brennstoffventilen (20,22) zugeordneten Zonen mindestens zwei scheibenförmige Zonen umfassen, die sich jeweils quer zur Zylinderachse (6) erstrecken, und in Richtung der Zylinderachse (6) benachbart angeordnet sind, und dass Umschaltmittel (26) vorgesehen sind, die derart ausgestaltet sind, dass sie Brennstoff wahlweise entweder zu jedem Brennstoffventil (20,22) verschiedener Zonen oder nur zu jedem Brennstoffventil (22) der einen Zone, oder nur zu jedem Brennstoffventil (20) der anderen Zone durchlassen.

2. Brennkraftmaschine nach Anspruch 1, dadurch gekennzeichnet, dass Brennstoffventile (20;22), denen die gleiche Zone zugeordnet ist, in Umfangsrichtung des Zylinders zueinander versetzt angeordnet sind.

3. Brennkraftmaschine nach einem der Ansprüche 1 oder 2 mit mindestens zwei Brennstoffventilen pro Zone und einer um die Zylinderachse (6) stattfindenden Drallbewegung (B) der Luft im Brennraum (4), dadurch gekennzeichnet, dass die Brennstoffventile (20,22) in allen Zonen so angeordnet sind, dass mindestens ein Teil der Brennstoffstrahlen in der gleichen Richtung wie die Drallbewegung (B) aus den Düsenlöchern austreten.

4. Brennkraftmaschine nach einem der Ansprüche 1 bis 3, dadurch gekennzeichnet, dass sie als Zweitakter ausgebildet ist.

5. Brennkraftmaschine nach einem der Ansprüche 1 bis 4, dadurch gekennzeichnet, dass im Zentrum des Zylinderdeckels (3) ein Auslassventil (5) für das Abgas angeordnet ist.

6. Brennkraftmaschine nach einem der Ansprüche 1 bis 5, dadurch gekennzeichnet, dass jeweils in einer radialen Ebene angeordnete Brennstoffventile (20,22) an eine gemeinsame Brennstoffzuführleitung (24) angeschlossen sind.

7. Brennkraftmaschine nach einem der Ansprüche 1-6, mit zwei Brennstoffventilen (20,22) je Brennstoffzuführleitung, dadurch gekennzeichnet, dass die gemeinsame Brennstoffzuführleitung (24) eine Gabelstelle aufweist, an der ein schwenkbares Umschaltorgan (26) angeordnet ist, dass - je nach Stellung - Brennstoff aus der Zuführleitung zu beiden Brennstoffventilen (20,22) oder zu dem einen der Brennstoffventile (20) oder zu dem anderen der Brennstoffventile (22) durchlässt.

8. Brennkraftmaschine nach einem der Ansprüche 1 bis 7, dadurch gekennzeichnet, dass das Verhältnis von Kolbenhub zu Bohrungsdurchmesser des Zylinders mindestens 3,5 beträgt.

9. Brennkraftmaschine nach einem der Ansprüche 1 bis 8, dadurch gekennzeichnet, dass der axiale Abstand (A) der zwei unterschiedlichen axialen Positionen, an denen die Brennstoffventile (20,22) angeordnet sind, mindestens 2% des Kolbenhubes beträgt.

## Claims

1. Reciprocating internal combustion engine of the diesel type with at least one cylinder containing piston (2), with a cylinder cover (3) covering the cylinder, which together with the piston (2) defines a combustion chamber (4), and with several fuel valves (20, 22) which each have at least one nozzle outlet via which the fuel is injected periodically into a zone of the combustion chamber (4) assigned to the particular fuel valve (20, 22), in which zone the jet of fuel emerging from the nozzle outlet spreads out, wherein the fuel valves (20, 22), looked at from the direction of the cylinder axis (6), are arranged in at least two different axial positions, characterised in that the zones assigned to the fuel valves (20, 22) comprise at least two disc-shaped zones each of which extend transverse to the cylinder axis (6) and are adjacent to each other in the direction of the cylinder axis (6), and that change-over devices (26) are provided which are arranged in such a way that they transmit fuel, as desired, either to each fuel valve (20, 22) in the different zones or only to each fuel valve (22) in one zone or only to each fuel valve (20) in the other zone.

2. Internal combustion engine according to Claim 1, characterised in that fuel valves (20; 22) which are assigned the same zone are peripherally displaced from each other.

3. Internal combustion engine according to one of Claims 1 or 2 with at least two fuel valves per zone and in which the air in the combustion chamber (4) exhibits a twisting motion (B) around the cylinder axis (6), characterised in that the fuel valves (20, 22) are arranged in all zones in such a way that at least some of the jets of fuel emerge from the nozzle openings in the same direction as the twisting motion (B).

4. Internal combustion engine according to one of Claims 1 to 3, characterised in that it is designed as two-stroke engine.

5. Internal combustion engine according to one of Claims 1 to 4, characterised in that an outlet valve (5) for the exhaust gas is located in the centre of the cylinder cover (3).

6. Internal combustion engine according to one of Claims 1 to 5, characterised in that all the fuel valves (20, 22) located in a given radial plane are connected to a common fuel supply pipe (24).

7. Internal combustion engine according to one of Claims 1-6, with two fuel valves (20, 22) per fuel supply pipe, characterised in that the common fuel supply pipe (24) has a fork in which is arranged a swivellable changeover device (26), which, depending on the position, transmits fuel from the supply pipe to both fuel valves (20, 22) or to one of the fuel valves (20) or to the other fuel valve (22).

8. Internal combustion engine according to one of Claims 1 to 7, characterised in that the ratio of the piston stroke to the internal diameter of the cylinder is at least 3.5.

9. Internal combustion engine according to one of Claims 1 to 8, characterised in that the axial spacing (A) between the two different axial positions at which the fuel valves (20, 22) are located is at least 2% of the piston stroke.

## Revendications

1. Moteur alternatif à combustion interne du type Diesel, avec au moins un cylindre présentant un piston (2), avec un couvercle de cylindre (3) recouvrant le cylindre qui délimite conjointement avec le piston (2) une chambre de combustion (4) et avec plusieurs soupapes de combustible (20, 22) qui présentent respectivement au moins un trou d'injecteur par lequel le combustible est injecté en cadence dans une zone de la chambre de combustion (4) associée à la soupape de combustible respective (20, 22), dans laquelle le jet de combustible sortant du trou d'injecteur s'étale, les soupapes de combustible (20, 22), en regardant dans la direction de l'axe de cylindre (6), sont disposées dans au moins deux positions axiales différentes, caractérisé en ce que les zones associées aux soupapes de combustible (20, 22) comportent au moins deux zones en forme de disque qui s'étendent respectivement transversalement à l'axe de cylindre (6) et qui sont disposées d'une manière avoisinante dans la direction de l'axe de cylindre (6) et que des moyens de commutation (26) sont prévus qui sont réalisés de façon qu'ils laissent passer le combustible sélectivement soit vers chaque soupape de combustible (20, 22) de zones différentes ou seulement vers chaque soupape de combustible (22) d'une zone ou seulement vers chaque soupape de combustible (20) de l'autre zone.

2. Moteur à combustion interne selon la revendication 1, caractérisé en ce que les soupapes de combustible (20; 22) auxquelles la même zone est associée, sont disposées suivant un décalage l'une relativement à l'autre dans la direction périphérique du cylindre.

3. Moteur à combustion interne selon l'une des revendications 1 ou 2, avec au moins deux soupapes de combustible par zone et un mouvement giratoire (B) se produisant autour de l'axe de cylindre (6) de l'air dans la chambre de combustion (4), caractérisé en ce que les soupapes de combustible (20, 22) sont disposées dans toutes les zones de façon qu'au moins une partie des jets de combustible sortent dans la même direction que le mouvement giratoire (B) des trous d'injecteur.

4. Moteur à combustion interne selon l'une des revendications 1 à 3, caractérisé en ce que celui-ci est réalisé sous forme de moteur à deux temps.

5. Moteur à combustion interne selon l'une des revendications 1 à 4, caractérisé en ce qu'il est disposé au centre du couvercle de cylindre (3) une soupape d'échappement (5) pour les gaz d'échappement.

6. Moteur à combustion interne selon l'une des revendications 1 à 5, caractérisé en ce que des soupapes de combustible (20, 22) disposées respectivement dans un plan radial sont raccordées à un conduit d'amenée de combustible commun (24).

7. Moteur à combustion interne selon l'une des revendications 1-6, avec deux soupapes de combustible (20, 22) par conduit d'amenée de combustible, caractérisé en ce que le conduit d'amenée de combustible commun (24) présente un endroit en fourche où est disposé un organe de commutation pivotant (26) qui, selon la position, permet le passage du combustible du conduit d'amenée vers les deux soupapes de combustible (20, 22) ou vers l'une des soupapes de combustible (20) ou vers l'autre des soupapes de combustible (22).

8. Moteur à combustion interne selon l'une des revendications 1 à 7, caractérisé en ce que le rapport de la course du piston au diamètre de perçage du cylindre est au moins de 3,5.

9. Moteur à combustion interne selon l'une des revendications 1 à 8, caractérisé en ce que l'écart axial (A) des deux positions axiales différentes, où sont disposées les soupapes de combustible (20, 22) représente au moins 2% de la course du piston.
